# EUROPÄISCHE PATENTSCHRIFT

(11) **EP 2 276 551 B1**
(45) Veröffentlichungstag und Bekanntmachung des Hinweises auf die Patenterteilung: **16.04.2014**
(21) Anmeldenummer: 09732872.8
(22) Anmeldetag: 16.04.2009
(51) Int. Cl.: B01D 53/62, B01D 53/78, B01D 53/96, C01B 31/20, C10L 3/00, F23J 15/04

(54) **VERFAHREN UND VORRICHTUNG ZUR ABSCHEIDUNG VON KOHLENDIOXID AUS RAUCH-, FAUL- UND/ODER ABGASEN**
METHOD AND DEVICE FOR SEPARATING CARBON DIOXIDE FROM STACK, SLUDGE, AND/OR EXHAUST GASES
PROCÉDÉ ET ÉQUIPEMENT POUR SÉPARER LE DIOXYDE DE CARBONE DE FUMÉES, DE GAZ DE FERMENTATION ET/OU D'EFFLUENTS GAZEUX

(30) Priorität: 18.04.2008 DE 102008020752; 18.08.2008 DE 102008039171
(43) Veröffentlichungstag der Anmeldung: 26.01.2011
(73) Patentinhaber: Institut Für Nachhaltigen Umweltschutz INU GBR, 12489 Berlin (DE)
(72) Erfinder: GANTERT, Siegfried, 12249 Berlin (DE); MÖLLER, Detlev, 12489 Berlin (DE); MÜLLER, Siegfried, 15758 Zernsdorf (DE); MOTHES, Sigmar, 12489 Berlin (DE)
(74) Vertreter: Uhlemann, Henry
(86) Internationale Anmeldenummer: PCT/EP2009/002974
(87) Internationale Veröffentlichungsnummer: WO 2009/127440

(56) Entgegenhaltungen:
- WO-A-2007/071633
- JP-A- 7 100 333
- XUE J ET AL: "Study on Desorbing Sulfur Dioxide from Citrate Solution by Ultrasonification" CHINESE JOURNAL OF CHEMICAL ENGINEERING, CHEMICAL INDUSTRY PRESS, BEIJING, CN, Bd. 15, Nr. 4, 1. August 2007 (2007-08-01), Seiten 486-491, XP022856665 ISSN: 1004-9541 [gefunden am 2007-08-01]
- N. GONDREXON, V. RENAUDIN, P. BOLDO, Y. GONTHIER, A. BERNIS, C. PETRIER: "Degassing effect and gas-liquid transfer in a high frequency sonochemical reactor" CHEMICAL ENGINEERING JOURNAL, Bd. 66, 1997, Seiten 21-26, XP002537264
- "4.2 The Mechanism of Ultrasonic Degassing of Liquids" In: Abramov O.V.: "High-Intensity Ultrasonics, Theory and Industrial Applications", 1988, Gordon and Breach Science Publishers, The Netherlends ISBN: 90-5699-041-1 pages 264-276,
- "Solution Degradation: Reaction with Oxygen, Irreversible Reaction with CO2" In: Kohl A L: "Gas Purification", 1997, Gulf Publishing Company, Houston, Texas ISBN: 0-88415-220-0 pages 232-234,

## Beschreibung

Die Erfindung betrifft ein Verfahren und eine Vorrichtung zur Abtrennung von Kohlendioxid (CO₂) aus Rauch-, Faul- und/oder Abgasen.

Die Anwendung erfolgt vorzugsweise an fossilgefeuerten Kraftwerken, aber auch bei allen bekannten Technologien, die CO₂ im Abgas in Konzentrationen zwischen 10% und 50% enthalten.

Die Forderungen nach einer Vermeidung von CO₂-Emissionen aus fossil gefeuerten Kraftwerken (KW) wird gegenwärtig immer lauter im Zusammenhang mit der nunmehr politisch akzeptierten Erkenntnis eines Klimawandels als Folge vom Menschen verursachter treibhauswirksamer Gase, unter denen dem Kohlendioxid die größte Bedeutung zukommt. Wegen der weltweit enormen Anzahl von bestehenden und geplanten bzw. im Bau befindlichen traditionellen Kraftwerken auf fossiler Brennstoffbasis ist es überaus sinnvoll, nach einem Verfahren zu suchen, das im Sinne einer End-of-Pipe Technology sowohl deren Restlaufzeiten als auch Kraftwerksneubauten rechtfertigt (Post-Combustion Technology).

Aufgrund der dargestellten Problematik werden seit längerer Zeit technische Lösungen zur Abtrennung von CO₂ (welches in Rauchgasen etwa zu 15% enthalten ist neben 79% Stickstoff, Restsauerstoff und Spurengasen) unter den schwierigen technologischen Bedingungen von Kraftwerken gesucht und vorgeschlagen (DE 10 2004 059 360 A1, DE 33 14 381 A1, DE 10 2005 050 385 A1). Rauchgase haben Temperaturen zwischen 50 und 60 °C sowie Rauchgasmengen bis mehrere Millionen m³/h. Die Absorptionsfähigkeit von CO₂ ist jedoch sehr begrenzt; sie liegt beispielsweise um den Faktor 36,5 unterhalb der des Schwefeldioxids, welches in Rauchgaswäschen mittels wässriger alkalischer Lösungen mit einer Effektivität von mehr als 95% abgetrennt werden kann.

Deshalb haben sich neben Ad- und Absorptionsverfahren alternative Verfahren der Verbrennung bzw. Umwandlung der Kohle (o. a. fossiler Rohstoffe) unter gleichzeitiger Abscheidung des dabei anfallenden (hochkonzentrierten) CO₂ in der entsprechenden Prozessstufe etabliert. Dazu zählen die sog. Precombustion-Techniken (beispielsweise Kohlevergasung) und die Verbrennung in reinem Sauerstoff, um ein CO2-reiches Abgas zu erhalten (beispielsweise Oxyfuel-Verfahren [EP 1 790 614 A1]). Die Anwendung dieser Techniken erfordert den vollständigen Neubau eines "CO₂-freien Kraftwerks". Es ist unwahrscheinlich, dass die Precombustion- und Oxyfuel-Verfahren im Rahmen der für eine CO₂-Begrenzung zur Verfügung stehenden Zeit von 20 bis 40 Jahren vor dem Hintergrund der diskutierten Klimaänderung das CO₂-Problem lösen können.

Daher haben Postcombustion-Verfahren, die an bestehende oder neu zu bauende Kraftwerke angekoppelt werden (im Allgemeinen nach der Rauchgas-Entschwefelungsanlage REA, die wiederum hinter der DeNOₓ- und Filteranlage angeordnet ist) einen unschätzbaren Vorteil und stellen den einzigen, auch ökonomisch vernünftigen Weg einer möglichen CO₂-Reduzierung bzw. - Begrenzung in der Übergangsperiode zu alternativen Energiequellen, beispielsweise der Photovoltaik, dar.

Den bisher bekannten Postcombustion-Verfahren haften jedoch gravierende Mängel an: Eine großtechnische und wirtschaftliche Anwendbarkeit vorausgesetzt, erfordern sie einen hohen Anteil an der energetischen KW-Effizienz (bis zu 15 %) und/oder setzen aggressive umweltfeindliche Chemikalien ein (beispielsweise die Aminwäsche mit Monoethanolamin, MEA) (Reichle, D., Houghton, J., Kane, B., Ekmann, J. (1999), A Review of Carbon Sequestration Science and Technology Opportunities by the U.S. Department of Energy).

Das grundsätzliche Problem der Postcombustion-CO₂-Abtrennung besteht darin, dass eine effektive CO₂-Absorption aus thermodynamischen Gründen zu einem Absorbat führt, das nur unter hohem energetischen Aufwand wieder zu hochkonzentriertem CO₂ zerlegt werden muss. Auch alle bislang bekannten Precombustion-Verfahren erfordern einen hohen energetischen Anteil, der unter anderem der Erzeugung der Hilfsstoffe (Sauerstoff, Wasserdampf u. a.) dient.

Es ist somit eine wissenschaftlich-technische Herausforderung, zum einen die zur CO₂-Abtrennung notwendige Energie in der Gesamtbilanz zu senken und zum anderen ein großtechnisch anwendbares Verfahren zu entwickeln, das an bestehende KW anschließt und eine CO₂-Reduzierung ermöglicht. Ein CO₂-Waschverfahren, selbst wenn es energetisch ungünstiger liegt als eine der Precombustion-Techniken, behält den unschätzbaren Vorteil der Kopplung mit bereits existierenden Kraftwerks-Typen.

Viele der bisher bekannten Verfahren konnten aus Gründen der geringen Effizienz, der Verwendung Umwelt belastender chemischer Substanzen oder der zu hohen Investitions- oder Betriebskosten nicht über den Versuchsbetrieb hinaus in die Praxis überführt werden oder befinden sich gegenwärtig im Stadium der Errichtung von Prototypen für Kraftwerke relativ kleiner Kapazität.

Bisherige Verfahren zur CO₂-Abscheidung können in mehrere Gruppen unterteilt werden. Einerseits sind Verfahren beschrieben, die CO₂ selektiv mittels physikalischer oder chemischer Ab- bzw. Adsorption aus dem Rauchgasstrom entfernen. Die Regeneration des Ab-/Adsorbers erfolgt in der Regel durch Druck- bzw. Temperaturänderungen in einem separaten Reaktionsbehälter. Ein weiteres Verfahren, die Membrantrennung, nutzt die unterschiedlichen Permeabilitäten der Gase. Schließlich sind Verfahren bekannt geworden, bei denen das anfallende CO₂ über eine Mineralisation gleich zu einem Produkt weiter verarbeitet wird. Weiterhin sind kryogene Verfahren wie etwa die Niedertemperaturdestillation zu erwähnen, die für eine effektive Betriebsweise Gasströme mit einem hohen CO₂-Gehalt (etwa 95 %) benötigen und im Zusammenhang mit Precombustion-Verfahren oder zur Aufbereitung der Gase in Biogasanlagen diskutiert werden bzw. sich in der Erprobungsphase befinden.

Verfahren zur Abtrennung von sauren Gasen sind in großer Anzahl bekannt. Bei hohem Anteil an CO₂ im Gastrom erfolgt die Absorption meist über physikalische Absorption durch Lösemittel wie Selexol (Dimethylether des Polyethylenglykols) oder Rectisol (kaltes Methanol).

Stand der Technik bei niedrigen Partialgasdrücken an CO₂ ist der Einsatz von wässrigen Alkanolaminlösungen wie etwa Monoethanolamin (MEA), Diethanolamin (DEA), Methyldiethanolamin (MDEA), Diglykolämin und Waschlösungen aus Kombinationen verschiedener Amine. Ebenso kommt aber auch heiße Kaliumcarbonatlösung zur Anwendung (Benfield-Prozess).

Beim Einsatz der Aminwäsche ist die Entfernung von Verunreinigungen aus dem Abgasstrom eine notwendige Voraussetzung. In der Absorptionskolonne wird das CO₂-Gas schließlich als Carbamat chemisch an die Waschlösung gebunden. In der nachgeschalteten Regenerationskolonne wird Wärme eingetragen, dabei wird das CO₂-Gas freigesetzt und die Waschflüssigkeit dem Kreislauf wieder zugeführt. Da chemisch aggressive Verbindungen zum Einsatz kommen, werden hohe Ansprüche an die Materialien gestellt. Zur Abtrennung von CO₂ muss Energie in Form von Wasserdampf bereitgestellt werden, die den Wirkungsgrad des Kraftwerks um etwa 12 % herabsetzt.

Für die Druckwasserwäsche sind umfangreiche Daten vorhanden, aus denen ein hoher Entwicklungsstand der Technologie abgeleitet werden kann (DE PS 12 02 256; W. Tentscher [2007], Anforderungen und Aufbereitung von Biogas zur Einspeisung in Erdgasnetze, aus: gwf Das Gas- und Wasserfach, Gas-Erdgas Jg. 148, Nr.9). Die Druckwasserwäsche wird hauptsächlich bei Biogasanlagen zur Reinigung von Methangas eingesetzt. In der Absorberkolonne werden H₂S und CO₂ unter Druck und niedrigen Lösemitteltemperaturen von Methan getrennt. Das Waschwasser wird über eine stufenweise Druckentspannung regeneriert, wobei das desorbierte methanreiche Gas in der ersten Stufe der Absorberkolonne wieder zugeführt wird. Das Waschwasser wird in der zweiten Stufe völlig entspannt, anschließend gekühlt und abschließend in der Absorberkolonne erneut versprüht. Die Nachteile (etwa gegenüber einem Membranverfahren) liegen in dem hohen Wasser- und Stromverbrauch.

Die genannten Absorptionsverfahren erfordern insbesondere in Verbindung mit den zum Einsatz kommenden Desorptionstechniken einen hohen Energieverbrauch, d. h. hohe Betriebskosten, sowie einen großen Platzbedarf und aufwendige Anlagentechnik, d. h. hohe Investitionskosten.

Bekannt ist weiterhin ein akustisches Verfahren zur Reinigung von Abluft aus Produktionsanlagen (DE 36 03 170 A1), Verbrennungsanlagen und Verbrennungskraftmaschinen. Das Verfahren beschränkt sich auf die Beseitigung von Staub bzw. Aerosolen, oxidierbaren Schadgasen wie CO, NOₓ und SO₂ sowie auf die Entfernung bzw. Rückführung unverbrannter Brennstoffe in der Gasphase und stellt insofern keine technische Lösung zur Abscheidung des Treibhausgases CO₂ aus Rauchgasen dar.

JP 07 100 333 A zeigt eine Desorption von Kohlendioxid aus Abgasen mit einem Absorptionsturm und einem Desorptionsturm, wobei die Waschflüssigkeit zur Freigabe des Kohlendioxids in einem separaten Verdampfer auf 80 bis 86 °C erwärmt und mit Ultraschall beaufschlagt wird. Die Anwendung einer Ultraschallbehandlung findet hier außerhalb des Desorptionsturmes mit einer an CO₂ bereits abgereicherten Absorptionsflüssigkeit statt, erfordert einen dementsprechend zusätzlichen apparativen Aufwand und der Gesamtwirkungsgrad des Kraftwerkes wird durch den zusätzlichen Wärmebedarf für den Verdampfer herabgesetzt.

Zusammenfassend kann festgestellt werden, dass alle bisher bekannten Verfahren wenigstens einen der nachfolgend aufgelisteten Nachteile, zumeist aber mehrere in Kombination aufweisen:
- geringe Effizienz und/oder Langsamkeit des Prozesses und daher Eignung nur für Kleinanlagen,
- Umweltbelastung meist durch Verwendung toxischer Substanzen und
- hohe Investitions- und/oder Betriebskosten.

Der Erfindung liegt daher die Aufgabe zugrunde, ein Verfahren und eine Vorrichtung bereitzustellen, mit dem die Abtrennung von CO₂ aus Rauch-, Faul und/oder Abgasen schnell, effizient, energiesparend und umweltverträglich durchgeführt wird.

Die Aufgabe wird durch die Merkmale der Ansprüche 1 und 24 gelöst.

Danach ist das erfindungsgemäße Verfahren zur Abtrennung von Kohlendioxid aus Rauch-, Faul und/oder Abgasen durch eine Absorption und eine nachfolgende Desorption aus einem Absorptionsmittel dadurch gekennzeichnet, dass das mit CO₂ angereicherte Absorptionsmittel im Anschluss an die Absorption von Kohlendioxid, vorzugsweise in einer Durchflussdesorption, einer Ultraschallbehandlung bei einer Temperatur unterhalb von 80 °C, vorzugsweise zwischen 40 und 79 °C, unterzogen wird.

Des Weiteren umfasst eine erfindungsgemäße Vorrichtung zur Abtrennung von Kohlendioxid aus Rauch-, Faul- und/oder Abgasen durch eine Absorption und eine nachfolgende Desorption aus einem Absorptionsmittel einen Absorber für eine Überführung des Kohlendioxids der Rauch- und Abgase in das Absorptionsmittel und einen Desorber für eine nachfolgende Desorption des Kohlendioxids, wobei der Desorber eine Ultraschallquelle aufweist, die so angeordnet ist, dass abgegebene Schallenergie der Ultraschallquelle derart auf das mit CO₂ angereicherte Absorptionsmittel einwirkt, dass CO₂ bei einer Temperatur unterhalb von 80 °C, vorzugsweise zwischen 40 und 79 °C, desorbiert wird.

Das Verfahren hat gegenüber bisher beschriebenen Verfahren folgende Vorteile:
1. Gegenüber vergleichbaren Absorptionsverfahren wie Aminwäschen, Druckwasserverfahren oder Druckwechselverfahren ermöglicht die Ultraschallanwendung eine einfache Ein-Schritt-Desorption des Gases CO₂ aus den Absorptionsmitteln. Dies ist von erheblichem Vorteil, da so eine kontinuierliche Abtrennung des Gases mit einem verfahrenstechnisch zu rechtfertigenden Aufwand betrieben werden kann. Ebenso wird die mit dem üblichen Verfahren (Stripper-Verfahren) verbundene starke Erwärmung des Absorptionsmittels überflüssig, die als Verursacher einer Wirkungsgradreduzierung mit verantwortlich zu machen ist.
2. Ein weiterer Vorteil betrifft die Regulierbarkeit des Verfahrens. Der Einsatz einer Ultraschallquelle kann entsprechend der Behandlung des Absorptionsmittels mit CO₂ reguliert werden, etwa durch eine pH-Messung. So zeigt ein vergleichsweise niedriger pH-Wert (nach Entfernung von SO₂) einen hohen Anteil an absorbiertem CO₂ in der Waschlösung an, so dass eine aktive Betriebsphase durchgeführt werden kann. Bei einem stark alkalischen pH-Wert kann eine Beschallung wegen einer zu geringen Beladung mit CO₂ dagegen sofort durch das Abschalten der Ultraschallquelle unterbleiben.
3. Konzeptionell ist das Ultraschallverfahren für eine CO₂-Gasabscheidung aus wässrigen Aminlösungen vorgesehen, durch die CO₂ mittels Chemisorption absorbiert wird. Darüber kann CO₂ auch über schwächere Bindungen absorbiert werden, wenn zum Beispiel Alkohole oder ionische Flüssigkeiten zum Einsatz kommen. Dies erlaubt eine Ultraschall-Desorption bei moderaten Temperaturen unter geringem Einsatz von zusätzlicher Wärmeenergie, was gleichzeitig eine energiesparsame und Material schonende Betriebsweise ermöglicht.
4. Durch die Austreibung des CO₂-Gases im Bereich der Ultraschallquelle kühlt sich das Lösungsmittel ab (negative Lösungsenthalpie); eine zirkulierende Waschlösung (Absorptionsmittel) verfügt somit über eine dynamisch erhöhte CO₂-Kapazität beim Eintritt in die Absorberkolonne.
5. Das mit CO₂ angereicherte Absorptionsmittel strömt durch eine geeignete Geometrie, vorzugsweise eine Röhre, und wird dabei durch außen angebrachte Ultraschallquellen einer Behandlung mit Ultraschall unterzogen. Dadurch wird auftretenden Bjerknes-Kräften entgegengewirkt und eine höhere Effizienz des Einsatzes von Ultraschall erreicht. Der weitgehende Verzicht auf eine Verdampfung des CO₂ beladenen Absorpionsmittels ermöglicht eine energiesparende Fahrweise des erfindungsgemäßen Prozesses. Durchgeführte Untersuchungen zeigen, dass die durch Ultraschall entstehenden Kavitäten zusätzliche Oberflächen erzeugen, die das CO₂ in die sich bildende Blasen, die aufsteigend gerichtet sind, leicht eindringen und vorteilhaft entgasen lassen. Durch den Einsatz von Ultraschall kann die thermische Energie in Form von Prozess- oder Abwärme für den Desorptionsvorgang auf einem niedrigen Temperaturniveau bereitgestellt werden. Aufgrund von weitgehend unterhalb des Siedepunktes des Absorptionsmittels liegenden Desorptionstemperaturen findet bei dem erfindungsgemäßen Verfahren eine vergleichsweise geringere Degradation des Absorptionsmittels statt, wodurch auch das Korrosionspotential auf einem niedrigen Niveau gehalten wird.

Zur Steigerung der Effizienz dieses Verfahrens können die Absorptionsmittel mit zusätzlichen chemischen

Substanzen versetzt werden, die das Absorptions-, ggf. Desorptionsvermögen erhöhen. In die nähere Auswahl kommen gelöste oder solubilisierte Mikro- und/oder Nanopartikel zur gezielten Bildung von Blasenkeimen. Dabei ist besonders der Einsatz von multiwall oder single walled Carbon Nano Tubes (SWCNT) vorgesehen.

Vorteilhaft ist weiterhin die Zugabe von oberflächenaktiven Substanzen, da dadurch die Kavitationsschwelle und das Anwachsen der Blasen beeinflusst werden kann. Der benötigte Schallwechseldruck in der Unterdruckphase hängt in direkter Weise mit der Oberflächenspannung der wachsenden Blase zusammen. Zusätzlich werden in Anwesenheit von Tensiden Mikroblasen in der Lösung stabilisiert, die als Blasenkeime wirksam werden können. Für das Verfahren kommen vor allem Zusätze in Form von Tensiden in Betracht, die eine Blasenbildung und Durchführung der Desorption erleichtern. Als weitere Auswahlkriterien werden die Stabilität des Tensids gegenüber Ultraschall, die Toxizität und biologische Abbaubarkeit berücksichtigt. Unter Beachtung diese Kriterien kommen insbesondere nichtionische Tenside wie etwa Alkylpolyglykoside (APG) in Betracht, zur weiteren Auswahl können grundsätzlich aber auch amphotere oder kationische Tenside herangezogen werden.

Da es in Verbindung mit dem Einsatz von Tensiden in der Nähe der Ultraschallquelle zu Schaumbildung und damit zu schädlichen Auswirkungen für die Ultraschallquelle kommen kann, ist der Zusatz von Antischaummitteln geboten. Als chemische Antischaummittel eignen sich Silikonöle oder Polyalkohole, die vor der Anschubphase des Prozesses dem Absorptionsmedium zugegeben werden.

Für reines Wasser ergeben sich gemäß der Laplace-Gleichung in der Zugphase Drücke in der Größenordnung von 1000 MPa, der experimentell gemessene Wert beträgt dagegen nur etwa 100 MPa (Sutilow, V. A. [1984] Physik des Ultraschalls: Grundlagen, Springer-Verlag, Wien, New York; Kuttruff, H. [1988], Physik und Technik des Ultraschalls, S. Hirzel Verlag Stuttgart), da sich die spontan gebildeten Hohlräume sofort mit Wasserdampf füllen. Flüssigkeiten mit gelösten Gasen bauen einen der Lösung gemäßen Partialdruck in der Blase auf und begünstigen damit die spontane Blasenbildung.

Weitere vorteilhafte Ausgestaltungen des erfindungsgemäßen Verfahrens sind in den Unteransprüchen beschrieben.

Eine Ausgestaltung ist dadurch gekennzeichnet, dass die Absorption und die Desorption mehrstufig durchgeführt werden.

In einer vorteilhaften Weiterbildung wird die Ultraschallbehandlung mit einer Frequenz von 20 bis 100 kHz, bevorzugt von 20 bis 50 kHz und besonders bevorzugt von 20 bis 45 KHz durchgeführt. Die Wahl der Frequenz für die Ultraschallbehandlung beeinflusst das Kavitationsverhalten des Absorptionsmittels und das Wachstum entstehender CO₂-Gasblasen wie auch den energetischen Verlauf des Desorptionsvorgangs. Vorteilhaft hat sich hier ein Frequenzbereich von 20 kHz bis 100 kHz gezeigt.

Eine Ausgestaltung ist dadurch gekennzeichnet, dass die Ultraschallbehandlung mit einer Eintrittsintensität von 0,05 bis 100 W/cm², bevorzugt 0,1 bis 100 W/cm² Eintrittsfläche oder 0,05 bis 100 W/l, bevorzugt 2 bis 100 W/l durchgeführt wird.

In einer Weiterbildung des Verfahrens werden die Absorption bei erhöhtem Druck und die Desorption bei vermindertem Druck durchgeführt.

In einer vorteilhaften Weiterbildung wird die Ultraschallbehandlung bei erhöhter Temperatur durchgeführt.

Eine erfindungsgemäße Ausgestaltung sieht vor, dass die Ultraschallbehandlung bei konstanter Frequenz und Eintrittsintensität durchgeführt wird.

In einer Weiterbildung wird die Ultraschallbehandlung bei variierender Frequenz und Eintrittsintensität durchgeführt.

Eine Ausgestaltung ist dadurch gekennzeichnet, dass die Ultraschallbehandlung in einem Beschallungszeitraum von höchstens 10 Minuten pro m³ Absorptionsmittel durchgeführt wird.

Ein bevorzugte Ausführung sieht vor, dass die Ultraschallbehandlung bei Drücken unter 1 bar zur Anwendung kommt.

In einer vorteilhaften Weiterbildung werden als Absorptionsmittel Wasser oder wässrige Gemische mit verschiedenen Alkoholen, vorzugsweise Methanol und Ethanol, verwendet.

Eine Ausgestaltung sieht vor, dass als Absorptionsmittel ionische Flüssigkeiten verwendet werden.

In einer vorteilhaften Ausführung werden wässrige Lösungen von Kaliumcarbonat (Pottasche) oder einem Gemisch aus Kaliumcarbonat und Piperazin als Absorptionsmittel verwendet.

Eine vorteilhafte Weiterbildung ist dadurch gekennzeichnet, dass als Absorptionsmittel wässrige Lösungen von Ammoniak und/oder organische Amine verwendet werden.

Eine Ausgestaltung des Verfahrens zeichnet sich dadurch aus, dass als Absorptionsmittel wässrige Lösungen von Diglykolamin, Ethanolaminen oder Gemische von primären oder sekundären mit tertiären Ethanolaminen verwendet werden. Eine bevorzugte Ausführungsform ist dadurch gekennzeichnet, dass bei Anwendung von Monoethanolamin (MEA) die Temperatur bei der ultraschallinitiierten Desorption zwischen 75 und 85 °C, bevorzugt 75 und 79 °C gehalten wird.

In einer Weiterbildung werden dem Absorptionsmittel Tenside zugesetzt.

In einer Ausgestaltung des erfindungsgemäßen Verfahrens werden dem Absorptionsmittel nichtionische, kationische, anionische oder amphotere Tenside zugesetzt.

Eine Weiterbildung sieht vor, dass dem Absorptionsmittel Mikro- oder Nanopartikel, insbesondere Carbon Nano Tubes, zugesetzt werden.

In einer Ausgestaltung des erfindungsgemäßen Verfahrens wird der pH-Wert des Absorptionsmittels während der Ultraschallbehandlung auf einen Wert von 2 bis 6,5 eingestellt.

Eine Weiterbildung ist dadurch gekennzeichnet, dass zur Oxidation des Schwefeldioxids oxidierende Substanzen, insbesondere Wasserstoffperoxid, zugesetzt werden, damit im Falle eines Ansteigens der SO₂-Konzentration durch Zusatz von Oxidationsmittel und anschließender Ausfällung von Gips einer Übersäuerung entgegengewirkt wird.

In einer vorteilhaften Ausgestaltung werden dem Absorptionsmittel Antischaummittel zugesetzt, wobei als Antischaummittel Silikonöle oder Polyalkohole zugesetzt werden können.

Im Folgenden wird die Erfindung anhand von Ausführungsbeispielen und Zeichnungen näher beschrieben.

Es zeigen
- Fig. 1: ein Prinzipschema einer einstufigen Anlage zur CO₂-Abscheidung und
- Fig. 2: ein Prinzipschema einer dreistufigen Anlage,
- Fig. 3: ein Fließbild einer CO₂-Ultraschall-desorption bei Temperaturen zwischen 40°C und 79°C,
- Fig. 4: ein Fließbild einer Parallelanordnung zur CO₂-Ultraschalldesorption bei Temperaturen zwischen 50°C und 79°C,
- Fig. 5: ein Fließbild einer einstufigen CO₂-Ultraschalldesorption mit Nutzung eines Abkühl-Effektes und
- Fig. 6: ein Diagramm zur zeitabhängigen Desorption von CO₂ mit Ultraschall.

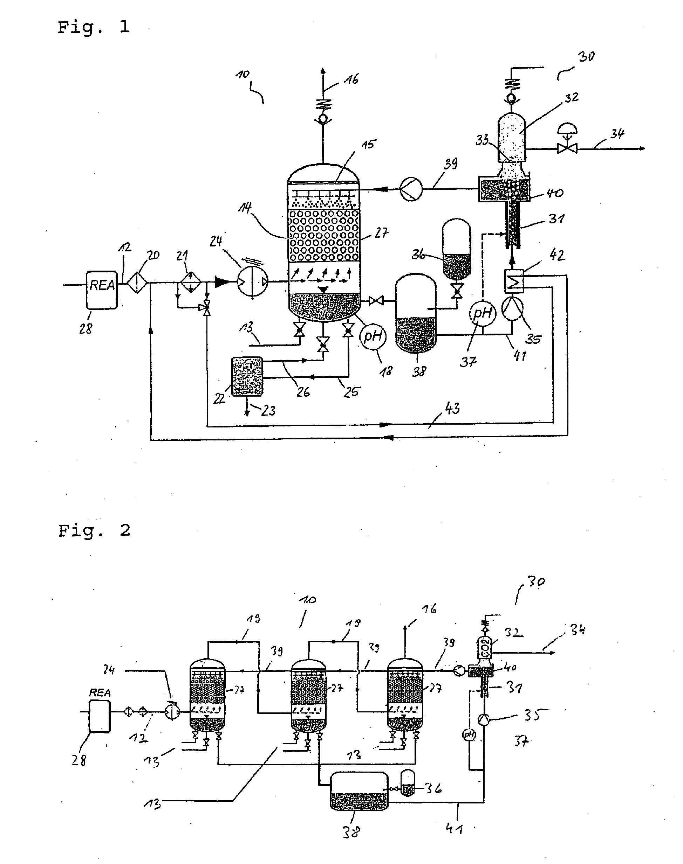

Ein Prinzipschema einer einstufigen Anlage zur CO₂-Abscheidung aus Rauchgasen ist in Fig. 1 dargestellt. Die Anlage weist einen Absorber 10 auf, der mit einem Desorber 30 kombiniert ist. Der Absorber 10 umfasst eine Absorptionskolonne 27 mit einer Füllkörperschüttung 14 für eine Verteilung eines Absorptionsmittels, das über eine Absorptionsmittelrückführung 39 im oberen Teil der Absorptionskolonne 27 über die Füllkörperschüttung 14 verteilt wird.

Über eine Rauchgaszuleitung 12 wird CO₂-haltiges Rauchgas über einen Filter 20 und eine Kühlung 21, gegebenenfalls über eine Druckverstärkung 24 in die Absorptionskolonne 27 unterhalb der Füllkörperschüttung 14 eingeführt. Das über die Rauchgasleitung 12 eingeführte CO₂-haltige Rauchgas ist bereits über eine Rauchgasentschwefelungsanlage (REA) 28 weitestgehend von SO₂ befreit worden. Das in die Absorptionskolonne 27 über die Rauchgaszuleitung 12, einen Filter 20 und eine Kühlung 21 eingeführte Rauschgas wird mit dem Absorptionsmittel im Gegenstrom geführt. Ein Tropfenabscheider 15 verhindert ein Austreten von Absorptionsmitteltröpfchen durch eine Reingasableitung 16 im oberen Bereich der Absorptionskolonne 27.

Das mit CO₂ beladene Absorptionsmittel sammelt sich im unteren Teil der Absorptionskolonne 27 und wird von dort in einen Auffangbehälter 38 überführt. Ein Nachfüllen von Absorptionsmittel erfolgt über eine Absorptionsmittelzugabe 13. Eventuell weiteres vorhandenes SO₂ wird in einer SO₂-Oxidationsanlage 22 in Gips überführt, der über eine Gipsabtrennung 23 abgeführt wird. Die SO₂-Oxidationsanlage 22 steht mit der Absorptionskolonne 27 über einen Absorptionsmittelablauf 25 und einen Absorptionsmittelzulauf 26 in Verbindung. Eine Mess- und Steuereinheit 18 überprüft und reguliert den pH-Wert des Absorptionsmittels.

Eine Chemikaliendosierung 36, die mit dem Auffangbehälter 38 in Verbindung steht, ermöglicht die Zugabe weiterer Mittel zur pH-Wert-Regulierung und zur verbesserten Desorption des Kohlendioxids aus dem Absorptionsmittel. Vom Auffangbehälter 38 wird das Absorptionsmittel über eine Pumpe 35 in die Desorptionskolonne 40 überführt. Eine Mess- und Steuereinheit 37 überprüft und regelt sowohl den pH-Wert als auch die Zuführung von Ultraschall über eine Ultraschallquelle 31. Die Ultraschallquelle 31 ist derart an oder in der Desorptionskolonne 40 angeordnet, dass ein möglichst großer Teil des mit CO₂ beladenen Absorptionsmittels mit Ultraschallenergie behandelt werden kann. Das vom CO₂ befreite Absorptionsmittel wird dann über die Absorptionsmittelrückführung 39 in die Absorptionskolonne 27 zurückgeführt. Ein Tropfenabscheider 33 hält mögliche Absorptionsmitteltropfen zurück.

Das austretende Kohlendioxid wird in einem CO₂-Auffanggefäß gesammelt und einer CO₂-Sequestrierung zugeführt.

Das Absorptionsmittel wird im Kreislauf geführt, und eine dadurch mögliche SO₂-Anreicherung wird vorteilhafterweise gegebenenfalls einer Oxidation über die SO₂-Oxidationsanlage 22 zugeführt, um eine weitere Verwendung des Absorptionsmittels zu gewährleisten. Die pH-Regulierungen über die Mess- und Steuereinheiten 18 und 37 lassen vorteilhafterweise die Möglichkeit offen, sowohl die Absorption als auch die Desorption zu optimieren. Ein vor dem Eintritt des mit CO₂ beladenen Absorptionsmittels in die Desorptionskolonne 40 vor der Ultraschallquelle 31 angeordneter Wärmetauscher 42 ermöglicht den Absorptionsmittelstrom wahlweise zu kühlen oder zu erwärmen. Ein Leitungssystem 43 verbindet die Rauchgaszuleitung 12, die Kühlung 21 und den Wärmetauscher 42, so dass eine regulierbare Zuleitung von kühlem oder warmem Rauchgasstrom in den Wärmetauscher 42 zur Einstellung einer optimalen Temperatur des Absorptionsmittels erreicht wird.

In Fig. 2 ist beispielhaft eine dreistufige in Reihe geschaltete Anlage zur CO₂-Abscheidung aus Rauchgasen dargestellt. Der Absorber 10 umfasst hier drei Absorptionskolonnen 27, die mit dem Desorber 30 kombiniert sind, der eine Desorptionskolonne 40 aufweist.

Die Stufigkeit der Anlage ergibt sich aus dem gewünschten Gesamtabscheidungsgrad und dem theoretischen Abscheidungsgrad der einzelnen Absorptionskolonnen 27 bzw. der Desorptionskolonne 40.

Das mit CO₂ beladene Absorptionsmittel aus den Absorptionskolonnen 27 wird im Auffangbehälter 38 gesammelt und dort gegebenenfalls über die Chemikaliendosierung 36 modifiziert und über die Absorptionsmittelweiterleitung 41 in die Desorptionskolonne 40 überführt. Die Rückführung des weitestgehend CO₂-freien Absorptionsmittels aus der Desorptionskolonne 40 erfolgt über die Absorptionsmittelrückführungen 39.

### Beispiel:

Zur Darstellung der vorteilhaften Energiebilanz wird folgender Laborversuch durchgeführt: 400 ml wässrige Lösung (6 g/l), ohne Zusätze zur Verbesserung der Gasblasenbildung oder CO₂-Aufnahmekapazität, wird einer Ultraschallbehandlung von 40 W bei 42 kHz exponiert. Dies entspricht einer flächenbezogenen Leistung von 0,33 W/cm² bei 120 cm² Beschallungsfläche und einer volumenbezogenen Durchschnittsleistung von 0,1 W/cm³. Nach einer Beschallungsdauer von einer Minute ist die Entgasung bis zu ca. 90 % abgeschlossen. Daraus ergibt sich für einen Liter Lösung ein Energiebedarf von 1,43 kcal/l. Im Vergleich dazu ist die Erwärmung von einem Liter Lösung von 40 °C auf 100 °C bei einer Aminwäsche mit einem Energieaufwand von ca. 60 kcal verbunden (Strippprozess). Legt man eine 10-fache Kapazität der Aminlösungen bezüglich der Aufnahme von CO₂ zu Grunde, so beträgt bei der Aminwäsche der Energieaufwand ca. 60 kcal (100 %), während beim Ultraschallverfahren ein Betrag von nur 14,3 kcal (24 %) zu konstatieren ist.

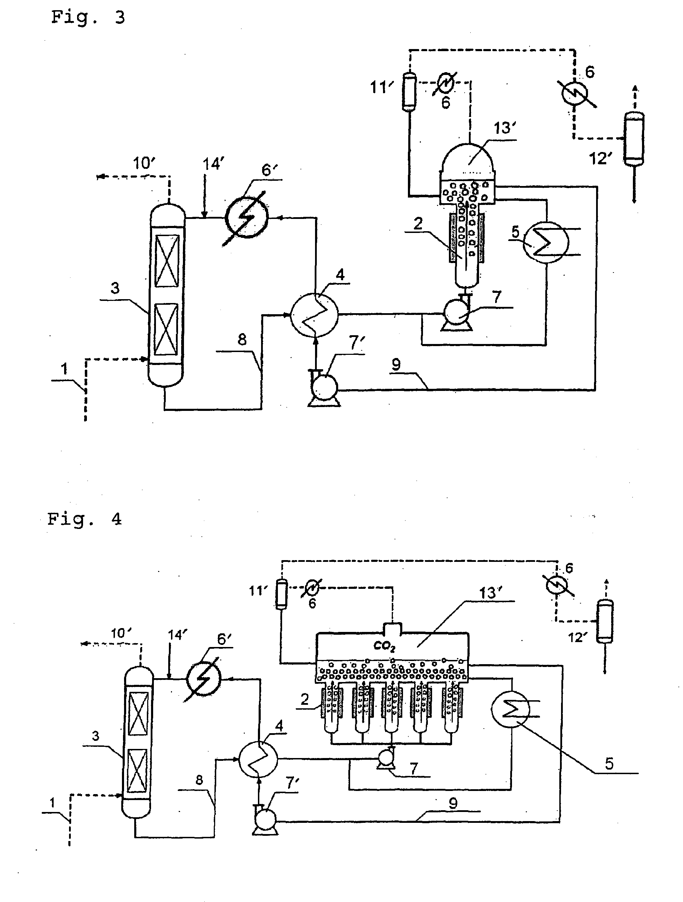

Fig. 3 zeigt ein Fließbild einer CO₂-Ultraschall-desorption bei Temperaturen zwischen 40°C und 79°C. Dargestellt ist ein einstufiger Ultraschalldesorber 2 zur Abscheidung von CO₂.

Die Anlage weist eine Absorptionskolonne 3 auf, die mit einem Ultraschalldesorptionsrohr 2 kombiniert ist. Die Absorptionskolonne 3 umfasst eine Füllkörperschüttung für eine Verteilung des Absorptionsmittels, das in einen oberen Teil der Absorptionskolonne 3 eingeleitet wird.

Über eine Rauchgaszuführung 1 wird das auf etwa 40°C bis 60°C abgekühlte und weitestgehend von SO₂ befreite Rauchgas in den unteren Teil der Absorptionskolonne 3 eingeleitet und treibt im Gegenstrom zu dem von oben fließenden Arbsorptionsmittel.

Am Boden der Absorptionskolonne 3 sammelt sich das reich mit CO₂ beladene Absorptionsmittel und wird von dort über eine Leitung mit CO₂ reicher Lösung 8 durch einen Wärmetauscher 4 mittels einer Pumpe 7 in das Ultraschalldesorptionsrohr 2 gefördert, innerhalb dem das mit CO₂ beladene Absorptionsmittel beim Passieren einer Ultraschallquelle von CO₂ entgast wird.

Eine mit Prozess- oder Abwärme gespeiste Heizung 5 stellt die für die CO₂-Abtrennung erforderliche Desorptionsenergie bereit.

Ein Entspannungsgefäß 13' dient zur Beruhigung des Absorptionsmittels und zur Abtrennung des CO₂-Gasstroms. Mit Hilfe einer weiteren Pumpe 7' gelangt das Absorptionsmittel zu einer Kühlung 6, mit der das Absorptionsmittel auf etwa 40°C abgekühlt wird, bevor es erneut der Absorptionskolonne 3 zugeführt wird. Degradiertes Absorptionsmittel wird über die Aminzufuhr 14, die auch als Absorptionsmittel Make-up bezeichnet wird, durch unverbrauchte Aminlösung ersetzt. Das Absorptionsmittel ist ein aus primären und tertiären oder sekundären und tertiären Ethanolaminen zusammengesetztes, wässriges, 25 bis 45%iges Gemisch aus Monoethanolamin (MEA) und Methyldiethanolamin (MDEA), wobei das Verhältnis MEA zu MDEA in der Regel kleiner als 1 gewählt wird.

Das von CO₂ gereinigte Reingas 10' wird aus der Absorptionskolonne 3 über einen Kamin in die Atmosphäre entlassen.

Das aus dem Absorptionsmittel ausgebrachte und sich in dem Entspannungsgefäß 13 sammelnde CO₂-Gas wird in einer Kühlung 6 weitestgehend von mitgeführte Feuchtigkeit befreit. Über einen Kondensor 11' wird durch den CO₂-Gasstrom mitgerissenes Absorptionsmittel zunächst in das Entspannungsgefäß 13' und dann über eine Leitung mit CO₂ armer Lösung 9 über eine Kühlung 6' in die Absorptionskolonne zurückgeleitet.

Der von Feuchtigkeit befreite CO₂-Gasstrom kann jetzt einer weiteren CO₂-Sequestrierung 12' zugeführt werden.

Fig. 4 zeigt ein Fließbild einer Parallelanordnung zur CO₂-Ultraschalldesorption bei Temperaturen zwischen 40°C und 79°C. Dargestellt ist ein Ultraschalldesorber mit beispielhaft fünf parallel geschalteten Ultraschalldesorptionsrohren.

Die Beschreibung der Anlage erfolgt entsprechend den Bezugszeichen in Fig. 1.

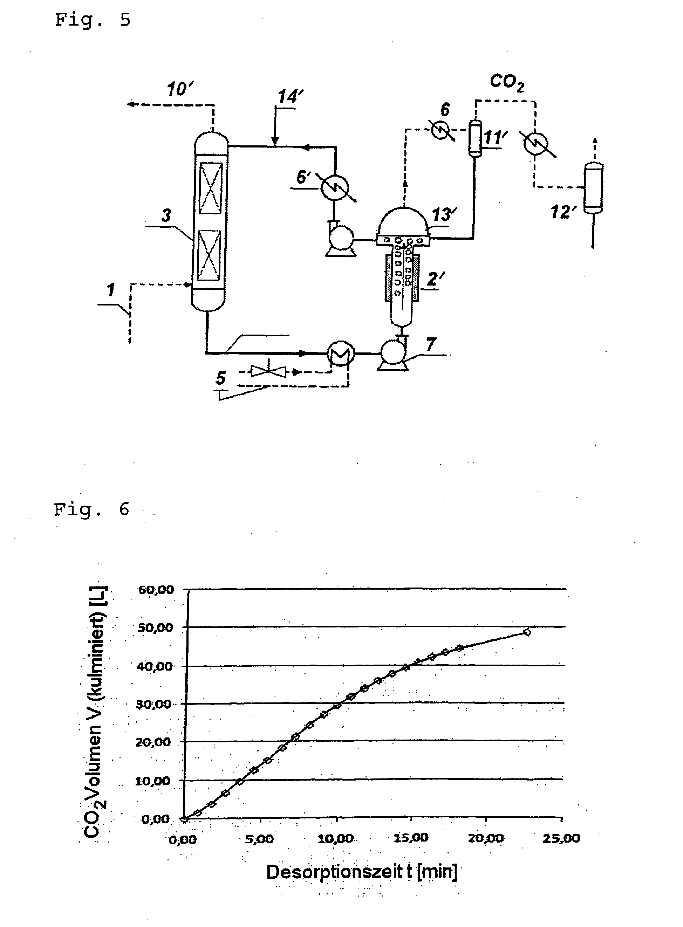

In Fig. 5 ist ein Fließbild einer einstufigen CO₂-Ultraschall-desorption mit Nutzung eines Abkühl-Effektes dargestellt.

Durch eine infolge der starken Entgasung während der Ultraschallbehandlung stattfindende Abkühlung des Absorptionsmittels, bei der sich an einem Ultraschalldesorptionsrohr 2' ein Temperaturgradient ausbildet und eine weitere Abkühlung im Entspannungsgefäß 13 erfolgt, kann der Bedarf für die Energie zur Kühlung des Absorptionsmittels insbesondere bei einem großen Überschuss von Prozess- und Abwärme nach der Ultraschallbehandlung in der Kühlung 6' zusätzlich gesenkt werden.

In Fig. 6 ist ein Diagramm zur zeitabhängigen Desorption von CO₂ mit Ultraschall dargestellt. Das Diagramm dokumentiert das Ergebnis von folgendem Versuch:

Von einer 30%igen wässrigen Absorptionslösung mit einer Mischung aus Monoethanolamin und Methyldiethanolamin werden 3,15 Liter über 25 Minuten einer Ultraschallquelle bei einer Beschallungsfrequenz von 40 kHz ausgesetzt. Die Primärleistung der Sonotrode beträgt 150 Watt. Der Versuch wird mit Ultraschallimpulsen einer Dauer von 0,5 Sekunden und Stoppzeiten einer Dauer von 4,5 Sekunden durchgeführt, was über den gesamten Zeitraum einer effektiven Ultraschall-Leistung von 15 Watt entspricht. Die Desorptionstemperatur liegt zwischen 48°C bis 64°C lag.

Das Diagramm zeigt, dass innerhalb eines Zeitraumes von 10 Minuten etwa 30 Liter CO₂ entgast sind.

### Bezugszeichenliste

- 1: Rauchgaszuführung
- 2, 2': Ultraschalldesorptionsrohr
- 3: Absorptionskolonne
- 4: Wärmetauscher
- 5: Heizung
- 6, 6': Kühlung
- 7, 7': Pumpen
- 8: Leitung mit CO₂ reicher Lösung
- 9: Leitung mit CO₂ armer Lösung
- 10': Reingas
- 11': Kondensor
- 12': CO₂ Sequestrierung
- 13': Entspannungsgefäß
- 14': Aminzufuhr

- 10: Absorber
- 11:
- 12: Rauchgaszuleitung
- 13: Absorptionsmittelzugabe
- 14: Füllkörperschüttung
- 15: Tropfenabscheider
- 16: Reingasableitung
- 17: CO₂-Rückführungsleitung
- 18: Mess- und Steuereinheit
- 19: Teilreingas-Weiterleitung

- 20: Filter
- 21: Kühlung
- 22: SO₂-Oxidationsanlage
- 23: Gipsabtrennung
- 24: Druckverstärkung
- 25: Absorptionsmittelablauf
- 26: Absorptionsmittelzulauf
- 27: Absorptionskolonne
- 28: Rauchgasentschwefelung

- 30: Desorber
- 31: Ultraschallquelle
- 32: CO₂-Auffanggefäß
- 33: Tropfenabscheider
- 34: CO₂-Sequestrierung
- 35: Pumpe
- 36: Chemikaliendosierung
- 37: Mess- und Steuereinheit
- 38: Auffangbehälter
- 39: Absorptionsmittelrückführung

- 40: Desorptionskolonne
- 41: Absorptionsmittelweiterleitung
- 42: Wärmetauscher
- 43: Leitungssystem

## Patentansprüche

1. Verfahren zur Abtrennung von Kohlendioxid aus Rauch-, Faul- und/oder Abgasen durch Absorption und nachfolgender Desorption aus einem Absorptionsmittel, **dadurch gekennzeichnet, dass** das mit CO₂ angereicherte Absorptionsmittel im Anschluss an die Absorption von Kohlendioxid einer Ultraschallbehandlung bei einer Frequenz von 20 bis 45 kHz bei einer Temperatur zwischen 40 und 79 °C unterzogen wird.

2. Verfahren nach Anspruch 1, **dadurch gekennzeichnet, dass** die Absorption und/oder die Desorption mehrstufig durchgeführt wird.

3. Verfahren nach einem der Ansprüche 1 bis 2, **dadurch gekennzeichnet, dass** die Ultraschallbehandlung bei variierender Frequenz und Eintrittsintensität durchgeführt wird.

4. Verfahren nach einem der Ansprüche 1 bis 3, **dadurch gekennzeichnet, dass** die Ultraschallbehandlung in einem Beschallungszeitraum von höchstens 10 Minuten pro m³ Absorptionsmittel durchgeführt wird.

5. Verfahren nach einem der Ansprüche 1 bis 4, **dadurch gekennzeichnet, dass** die Ultraschallbehandlung bei Drücken unter 1 bar zur Anwendung kommt.

6. Verfahren nach einem der Ansprüche 1 bis 5, **dadurch gekennzeichnet, dass** wässrige Lösungen von Kaliumcarbonat (Pottasche) oder einem Gemisch aus Kaliumcarbonat und Piperazin als Absorptionsmittel verwendet werden.

7. Verfahren nach einem der Ansprüche 1 bis 6, **dadurch gekennzeichnet, dass** als Absorptionsmittel wässrige Lösungen von Diglykolamin, Ethanolaminen oder wässrige Gemische von primären oder sekundären mit tertiären Ethanolaminen verwendet werden.

8. Verfahren nach Anspruch 7, **dadurch gekennzeichnet, dass** bei einer Anwendung von Monoethanolamin (MEA) die Temperatur der ultraschallinitiierten Desorption zwischen 75 und 79 °C gehalten wird.

9. Verfahren nach einem der Ansprüche 1 bis 8, **dadurch gekennzeichnet, dass** dem Absorptionsmittel nichtionische, kationische anionische oder amphotere Tenside zugesetzt werden.

10. Verfahren nach einem der Ansprüche 1 bis 9, **dadurch gekennzeichnet, dass** dem Absorptionsmittel Mikro- oder Nanopartikel, insbesondere Carbon Nano Tubes zugesetzt werden.

11. Verfahren nach einem der Ansprüche 1 bis 10, **dadurch gekennzeichnet, dass** der pH-Wert des Absorptionsmittels während der Ultraschallbehandlung auf einen Wert von 2 bis 6,5 eingestellt wird.

12. Verfahren nach einem der Ansprüche 1 bis 11, **dadurch gekennzeichnet, dass** zur Oxidation von Schwefeldioxid oxidierende Substanzen, insbesondere Wasserstoffperoxid, zugesetzt werden.

13. Verfahren nach einem der Ansprüche 1 bis 12, **dadurch gekennzeichnet, dass** als Antischaummittel Silikonöle oder Polyalkohole zugesetzt werden.

14. Vorrichtung zur Abtrennung von Kohlendioxid aus Rauch-, Faul- und/oder Abgasen durch Absorption und nachfolgender Desorption aus einem Absorptionsmittel, umfassend einen Absorber (10) für eine Überführung des Kohlendioxids der Rauch- und Abgase in das Absorptionsmittel und einen mit einem Ultraschalldesorptionsrohr (2) versehenen Desorber (30) mit einem Entspannungsgefäß (13') für eine nachfolgende Desorption des Kohlendioxids, wobei eine Heizung (5) das Entspannungsgefäß (13') mit einer Leitung (8) zum Ultraschalldesorptionsrohr (2) verbindet, wobei das Absorptionsmittel zur CO₂-Entgasung mit der Heizung (5) auf eine Temperatur zwischen 40 und 79 °C erwärmt wird und das Ultraschalldesorptionsrohr (2) dazu geeignet ist, Ultraschall einer Frequenz von 20 bis 45 kHz auf das Absorptionsmittel auszuüben.

## Claims

1. Process for the separation of carbon dioxide from flue gas, digester gas, and/or waste gases by absorption and subsequent desorption from an absorbent, **characterized in that** the CO-enriched absorbent, after absorbing the carbon dioxide, is subjected to ultrasonic treatment at a frequency of 20 to 45 kHz, and at a temperature between 40 and 79°C.

2. Process according to claim 1, **characterized in that** the absorption and/or the desorption are performed in several stages.

3. Process according to one of the claims 1 to 2, **characterized in that** the ultrasonic treatment is performed at varying frequencies and varying initial intensities.

4. Process according to one of the claims 1 to 3, **characterized in that** the ultrasonic treatment is performed within a ultrasonication time of no more than 10 minutes per m³ absorbent.

5. Process according to one of the claims 1 to 4, **characterized in that** the ultrasonic treatment is applied at pressures of less than 1 bar.

6. Process according to one of the claims 1 to 5, **characterized in that** aqueous solutions of potassium carbonate (potash), or of a mixture of potassium carbonate and piperazine, are used as absorbents.

7. Process according to one of the claims 1 to 6, **characterized in that**, as absorbents, aqueous solutions of diglycolamine, ethanolamines, or aqueous mixtures of primary or secondary ethanolamines with tertiary ones are used.

8. Process according to claim 7, **characterized in that** if monoethanolamine (MEA) is used, the temperature of the ultrasonically initiated desorption is maintained between 75 and 79 °C.

9. Process according to one of the claims 1 to 8, **characterized in that** non-ionic, cationic, anionic or amphoteric surfactants are added to the absorbent.

10. Process according to one of the claims 1 to 9, **characterized in that** micro- or nanoparticles, in particular carbon nano tubes, are added to the absorbent.

11. Process according to one of the claims 1 to 10, **characterized in that** the pH value of the absorbent is adjusted to a value between 2 and 6.5 during ultrasonic treatment.

12. Process according to one of the claims 1 to 11, characte-rized in that oxidizing substances, in particular hydrogen peroxide, are added for the oxidation of sulphur dioxide.

13. Process according to one of the claims 1 to 12, **characterized in that** silicon oils or polyalcohols are used as anti-foaming agents.

14. A system or device for the separation of carbon dioxide from flue gas, digester gas, and/or waste gases by absorption and subsequent desorption from an absorbent, comprising an absorber (10) for transferring the carbon dioxide of the flue and waste gases into the absorbent, and a desorber (30) equipped with an ultrasound desorption tube (2), said desorber having an expansion vessel (13') for subsequent desorption of the carbon dioxide, whereby a heater (5) connects the expansion vessel (13') with a tube (8) to the ultrasound desorption tube (2), the absorbent being heated to a temperature between 40 and 79 °C by means of the heater (5) for CO₂-degassing, and the ultrasound desorption tube (2) being suitable for applying ultrasound of a frequency between 20 and 45 kHz to the absorbent.

## Revendications

1. Procédé pour séparer du dioxyde de carbone de gaz de fumée, de gaz de fermentation et/ou d'effluents gazeux par absorption et désorption consécutive à partir d'un absorbant, **caractérisé en ce que** l'absorbant enrichi avec du CO₂ est soumis, suite à l'absorption de dioxyde de carbone, à un traitement aux ultrasons à une fréquence de 20 à 45 kHz et à une température comprise entre 40 et 79 °C.

2. Procédé selon la revendication 1, **caractérisé en ce que** l'absorption et/ou la désorption est/sont réalisée(s) en plusieurs étapes.

3. Procédé selon l'une des revendications 1 à 2, **caractérisé en ce que** le traitement aux ultrasons est réalisé avec une fréquence et une intensité d'entrée qui varient.

4. Procédé selon l'une des revendications 1 à 3, **caractérisé en ce que** le traitement aux ultrasons est réalisé sur une période de sonorisation d'au plus 10 minutes par m³ d'absorbant.

5. Procédé selon l'une des revendications 1 à 4, **caractérisé en ce que** le traitement aux ultrasons est appliqué à des pressions inférieures à 1 bar.

6. Procédé selon l'une des revendications 1 à 5, **caractérisé en ce que** l'on utilise en tant qu'absorbant des solutions aqueuses de carbonate de potassium (potasse) ou d'un mélange de carbonate de potassium et de pipérazine.

7. Procédé selon l'une des revendications 1 à 6, **caractérisé en ce que** l'on utilise en tant qu'absorbant des solutions aqueuses de diglycolamine, d'éthanolamines, ou des mélanges aqueux d'éthanolamines primaires ou secondaires avec des éthanolamines tertiaires.

8. Procédé selon la revendication 7, **caractérisé en ce qu'**en cas d'utilisation de monoéthanolamine (MEA), la température de la désorption initiée aux ultrasons est maintenue entre 75 et 79 °C.

9. Procédé selon l'une des revendications 1 à 8, **caractérisé en ce que** l'on ajoute à l'absorbant des tensioactifs non ioniques, cationiques, anioniques ou amphotères.

10. Procédé selon l'une des revendications 1 à 9, **caractérisé en ce que** l'on ajoute à l'absorbant des micro- ou des nanoparticules, en particulier des nanotubes de carbone.

11. Procédé selon l'une des revendications 1 à 10, **caractérisé en ce que** la valeur de pH de l'absorbant pendant le traitement aux ultrasons est réglée sur une valeur comprise entre 2 et 6,5.

12. Procédé selon l'une des revendications 1 à 11, **caractérisé en ce que**, pour l'oxydation du dioxyde de soufre, on ajoute des substances oxydantes, en particulier du peroxyde d'hydrogène.

13. Procédé selon l'une des revendications 1 à 12, **caractérisé en ce que** l'on ajoute en tant qu'agent anti-mousse des huiles de silicone ou des polyols.

14. Dispositif pour séparer du dioxyde de carbone de gaz de fumée, de gaz de fermentation et/ou d'effluents gazeux par absorption et désorption consécutive à partir d'un absorbant, comprenant un absorbeur (10) pour un transfert du dioxyde de carbone des gaz de fumée et des effluents gazeux dans l'absorbant, et un désorbeur (30) muni d'un tube de désorption aux ultrasons (2) et équipé d'un réservoir de détente (13') pour une désorption consécutive du dioxyde de carbone, dans lequel un chauffage (5) relie le réservoir de détente (13') à une conduite (8) menant au tube de désorption aux ultrasons (2), dans lequel l'absorbant, pour le dégazage du CO₂, est chauffé par le chauffage (5) à une température comprise entre 40 et 79 °C, et dans lequel le tube de désorption aux ultrasons (2) est approprié pour appliquer sur l'absorbant des ultrasons d'une fréquence comprise entre 20 et 45 kHz.
